# FASCICULE DE BREVET EUROPEEN

(11) **EP 0 447 304 B1**
(45) Date de publication et mention de la délivrance du brevet: **18.08.1993**
(21) Numéro de dépôt: 91400647.3
(22) Date de dépôt: 08.03.1991
(51) Int. Cl.: B60H 1/00

(54) **Dispositif de chauffage et de ventilation de l'habitacle d'un véhicule automobile**
Vorrichtung zur Belüftung und Heizung des Fahrgastraums eines Kraftfahrzeugs
Device for heating and ventilation of a motor vehicle compartment

(30) Priorité: 14.03.1990 FR 9003279
(43) Date de publication de la demande: 18.09.1991
(73) Titulaire: VALEO THERMIQUE HABITACLE, 78320 Le Mesnil-Saint-Denis (FR)
(72) Inventeur: Loup, Didier, F-78310 Maurepas (FR)
(74) Mandataire: Gamonal, Didier

(56) Documents cités:
- FR-A- 2 503 056
- US-A- 4 582 252
- US-A- 4 842 047
- US-A- 4 852 638

## Description

L'invention concerne un dispositif de chauffage et de ventilation de l'habitacle d'un véhicule automobile, du type comprenant un boîtier délimitant une chambre de distribution et ménageant une entrée d'air pour introduire de l'air frais ou réchauffé dans la chambre de distribution et des sorties d'air pour distribuer cet air frais ou réchauffé en différentes zones de l'habitacle, un volet de distribution étant monté à pivotement autour d'un axe à l'intérieur de la chambre de distribution pour régler à volonté la répartition de l'air distribué par les sorties d'air.

Dans les dispositifs connus de ce type, on prévoit habituellement une sortie d'air formant bouche d'aération au niveau de la planche de bord, une sortie d'air formant bouche de dégivrage/désembuage du pare-brise et une sortie d'air formant bouche en partie basse de l'habitacle.

Un dispositif de ce type est connu d'après le Brevet français FR-A-2 503 056, au nom de SAAB-SCANIA AKTIEBOLAG. Ce dispositif connu a pour avantage de faire appel à un seul volet de distribution, au lieu de deux volets habituellement, pour assurer la distribution de l'air à travers les sorties.

Toutefois, du fait qu'il comporte un seul volet de distribution, ce dispositif connu n'offre qu'un nombre limité de modes de distribution de l'air frais ou réchauffé à travers les sorties d'air du dispositif.

Or, les cahiers des charges des constructeurs automobiles imposent actuellement aux dispositifs de ce type de pouvoir assurer au moins cinq modes de distribution différents, pas possible avec le dispositif du Brevet français précité.

C'est, en conséquence, un but de l'invention de procurer un dispositif du type défini en introduction qui permet, tout en utilisant un seul volet de distribution, d'offrir au moins cinq modes de distribution différents.

Conformément à l'invention, le boîtier du dispositif délimite un premier conduit qui comporte au moins une cloison interne s'étendant partiellement à l'intérieur de la chambre de distribution et perpendiculairement à l'axe de pivotement du volet de distribution pour former au moins deux sorties d'air adjacentes, le boîtier délimite en outre un second conduit qui forme une autre sortie d'air, et le volet de distribution comprend une première partie et une seconde partie s'étendant respectivement de part et d'autre de l'axe de pivotement, la première partie de volet comportant au moins deux aubes décalées axialement et angulairement entre elles pour contrôler sélectivement la distribution de l'air par les sorties du premier conduit, et la seconde partie de volet comportant une aube pour contrôler la distribution de l'air par la sortie du second conduit.

Comme le volet de l'invention comprend des aubes décalées angulairement et axialement contrôlant des sorties différentes, il est possible d'assurer ainsi cinq modes de distribution différents en fonction de la position angulaire du volet.

Dans une forme de réalisation préférée de l'invention, le premier conduit comporte deux cloisons internes formant trois sorties d'air adjacentes, à savoir une sortie centrale et deux sorties latérales, la première partie du volet de distribution comprend trois aubes décalées axialement et angulairement entre elles, à savoir une aube centrale et deux aubes latérales propres à contrôler respectivement la sortie centrale et les deux sorties latérales précitées, tandis que la seconde partie du volet comprend une aube unique propre à contrôler la sortie du second conduit.

Avantageusement, les deux aubes latérales sont dans le même plan, tandis que l'aube centrale est décalée angulairement par rapport au plan des deux aubes latérales, l'aube unique de la seconde partie du volet étant sensiblement dans le même plan que celui des aubes latérales.

Avantageusement, la sortie centrale dessert une bouche d'aération au niveau de la planche de bord, les sorties latérales desservent respectivement des bouches de dégivrage/désembuage du pare-brise, tandis que la sortie du second conduit dessert une bouche en partie basse de l'habitacle.

Dans la description qui suit, donnée seulement à titre d'exemple, on se réfère aux dessins annexés, sur lesquels :
- la figure 1 est une vue de dessus d'un dispositif de chauffage et de ventilation selon l'invention ;
- la figure 2 est une vue en coupe suivant la ligne II-II de la figure 1 ;
- la figure 3 est une vue en perspective du volet de distribution du dispositif des figures 1 et 2 ; et
- les figures 4 à 8 sont des vues partielles en coupe, analogues à celle de la figure 2, montrant cinq positions différentes du volet de distribution assurant cinq modes de distribution différents.

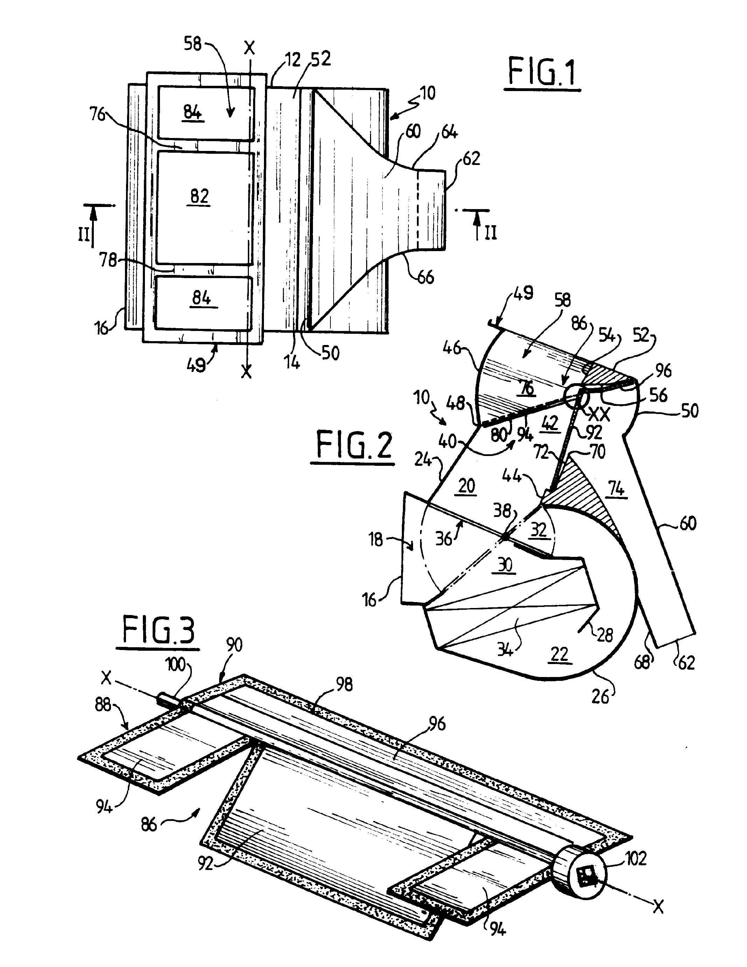

Le dispositif représenté aux figures 1 et 2 comprend un boîtier 10, avantageusement formé par moulage d'une matière plastique, comportant deux parois latérales 12 et 14 parallèles entre elles (figure 1) qui sont reliées entre elles par différentes parois à génératrices parallèles.

Le boîtier 10 comprend un embout de raccordement 16, de section générale rectangulaire, qui s'étend sur toute la largeur du boîtier entre les parois 12 et 14. L'embout 16 est propre à être raccordé à la sortie d'un groupe moto-ventilateur (non représenté) propre à envoyer de l'air frais à l'intérieur du boîtier.

L'embout 16 débouche dans une conduite d'entrée d'air frais 18 qui alimente, de manière en soi connue, une branche 20 de transmission d'air frais et une branche 22 de réchauffage d'air (figure 2).

La branche 20 est limitée vers le haut par une cloison 24 à génératrices parallèles qui s'étend sur toute la largeur du boîtier et qui se raccorde sur l'embout 16. La branche 22 est limitée vers le bas par une paroi 26 à génératrices parallèles qui s'étend sur toute la largeur du boîtier et qui se raccorde sur l'embout 16. La branche 22 a une forme générale de U, limitée extérieurement par la paroi 26 et limitée intérieurement par une cloison 28 s'étendant sur toute la largeur du boîtier. Les deux extrémités de la branche 22 en forme de U forment respectivement une section d'entrée 30 et une section de sortie 32 qui communiquent respectivement en amont et en aval de la branche de transmission d'air frais 20.

La branche 22 loge intérieurement un échangeur de chaleur 34 avantageusement constitué par un radiateur parcouru par le fluide de refroidissement du moteur du véhicule automobile. L'échangeur 34 permet de réchauffer l'air qui, pénétrant par la section d'entrée 30 de la branche 22, ressort par sa section de sortie 32.

Le dispositif comprend en outre un volet de mixage 36 monté à pivotement autour d'un axe transversal 38. Le volet 36 est disposé à la jonction de la conduite d'entrée 18, de la branche de transmission d'air frais 20 et de la branche de réchauffage d'air 22 pour répartir, à volonté, le débit de l'air circulant dans les branches 20 et 22. Le volet 36 peut pivoter entre une position extrême (représentée en trait plein) dans laquelle l'air passe uniquement par la branche 22 pour être réchauffé et une autre position extrême (représentée en trait interrompu) dans lequel l'air passe simplement par la branche 20, sans être réchauffé. Toutes les positions intermédiaires sont possibles pour ajuster la répartition de l'air entre les branches 20 et 22 et par conséquent la température de cet air.

A leur sortie, les branches 20 et 22 débouchent sur une zone de mixage qui constitue en même temps l'entrée d'air 40 d'une chambre de distribution 42. L'entrée d'air 40 s'étend sur toute la largeur du boîtier et est limitée, dans la direction perpendiculaire, par la paroi 24 et par une portion de paroi 44 qui prolonge la paroi 26 au niveau de la section de sortie 32 de la branche 22.

La chambre de distribution 42 s'étend sur toute la largeur du boîtier et est limitée par une paroi 46 à section en arc de cercle, centrée sur un axe XX, parallèle aux génératrices du boîtier. La paroi 46 se raccorde le long d'une génératrice 48 avec la paroi 24 et se raccorde, à son autre extrémité, sur une embouchure de sortie 49, de forme générale rectangulaire.

Du côté opposé, par rapport à l'axe XX, la chambre 42 est limitée par une paroi 50 à génératrices parallèles, s'étendant sur toute la largeur du boîtier, et possédant une section en arc de cercle centrée sur l'axe XX. La paroi 50 se raccorde avec une paroi 52, s'étendant sur toute la largeur du boîtier et se raccordant avec l'embouchure 49. Cette paroi 52 se raccorde, du côté de l'embouchure 49, avec une paroi 54 qui s'étend jusqu'à proximité de l'axe XX et qui se raccorde avec une autre paroi interne 56 qui se raccorde elle-même à la paroi 52 à son autre extrémité.

Les parois 46 et 54 délimitent entre elles un premier conduit 58 faisant communiquer la chambre 42 avec l'embouchure de sortie 49.

La paroi 50 se raccorde d'autre part avec une paroi 60 à génératrices parallèles qui aboutit jusqu'à une sortie 62 constituée par une embouchure de forme générale rectangulaire et de largeur plus faible que celle du boîtier. La paroi 60 se raccorde latéralement sur deux parois 64 et 66 qui elles-mêmes se raccordent entre elles par une paroi 68 opposée à la paroi 50 (figure 2). La paroi 68 rejoint la paroi 26 et se prolonge jusqu'à la chambre 42. La paroi 68 est reliée, le long d'une arête 70 à une paroi en retrait 72 elle-même reliée à la paroi 44. Les parois 60, 64, 66 et 68 délimitent entre elles un second conduit 74 faisant communiquer la chambre 42 avec la sortie 62.

Le premier conduit 58 est divisé par deux cloisons transversales 76 et 78 qui s'étendent perpendiculairement à l'axe XX. La paroi 76 relie les parois 46 et 54 (figure 2) en se raccordant en partie supérieure sur l'embouchure 49 et est limitée, en partie inférieure par un bord 80 sensiblement radial par rapport à l'axe XX. Il en est de même pour la paroi 78. Les parois 76 et 78 délimitent ainsi à l'intérieur du conduit 58 trois sorties : une sortie centrale 82 et deux sorties latérales 84 chacune de forme rectangulaire (figure 1).

Dans l'exemple, la sortie centrale 82 est propre à desservir une bouche d'aération au niveau de la planche de bord du véhicule automobile, les deux sorties latérales 84 desservent des bouches de dégivrage/désembuage du pare-brise et la sortie 62 du second conduit 74 dessert une bouche en partie basse de l'habitacle, correspondant à une position dite "pieds".

La répartition de l'air entre les sorties précitées est assurée par un volet unique 86 qui est monté à rotation autour de l'axe XX. Le volet 86 comprend (figures 2 et 3) une première partie 88 et une seconde partie 90 disposées respectivement de part et d'autre de l'axe XX. La partie 88 comprend une aube centrale 92 de forme générale rectangulaire propre à contrôler la sortie 82 et deux aubes latérales 94 propres à contrôler les deux sorties 84. La seconde partie 90 est constituée par une seule aube 96 propre à contrôler le second conduit 74. Comme montré à la figure 3, les aubes 92 et 94 sont décalées axialement et angulairement entre elles par rapport à l'axe XX. Les deux aubes latérales 94 sont dans le même plan tandis que l'aube centrale 92 est décalée angulairement par rapport au plan des deux aubes latérales, l'aube unique 96 de la seconde partie 90 du volet étant dans ce cas sensiblement dans le même plan que celui des aubes latérales mais pouvant être également si nécessaire décalée angulairement.

Comme montré à la figure 3, les deux aubes latérales 94 et l'aube centrale 92 sont des plaques de forme générale rectangulaire ayant chacune un côté rattaché à l'axe de pivotement du volet et trois côtés propres à venir frotter à étanchéité contre les parois internes et/ou les cloisons internes du premier conduit. L'aube 96 de la seconde partie de volet est également constituée par une plaque généralement rectangulaire ayant un côté rattaché à l'axe de pivotement et trois côtés frottant à étanchéité contre les parois internes du second conduit.

Dans ce cas, il faut comprendre que l'étanchéité entre les diverses aubes et les cloisons et/ou les parois doit être la plus grande possible en position de fermeture des conduits considérés tout en admettant une fuite dans les autres positions.

Pour cela, les trois côtés de chacune des aubes, qui ne sont pas rattachés à l'axe central, sont munis d'un joint d'étanchéité 98, par exemple surmoulé. L'axe XX du volet 86 est prolongé d'un côté par un pivot 100 et du côté opposé par un palier cylindrique 102 comportant un moyen d'entraînement dudit volet, tel qu'un carré de manoeuvre.

La première partie 88 du volet, formée de l'aube centrale 92 et des deux aubes latérales 94 ainsi que la seconde partie 90, formée de l'aube 96, s'étendent sur la même largeur, dans la direction de l'axe XX (figure 3).

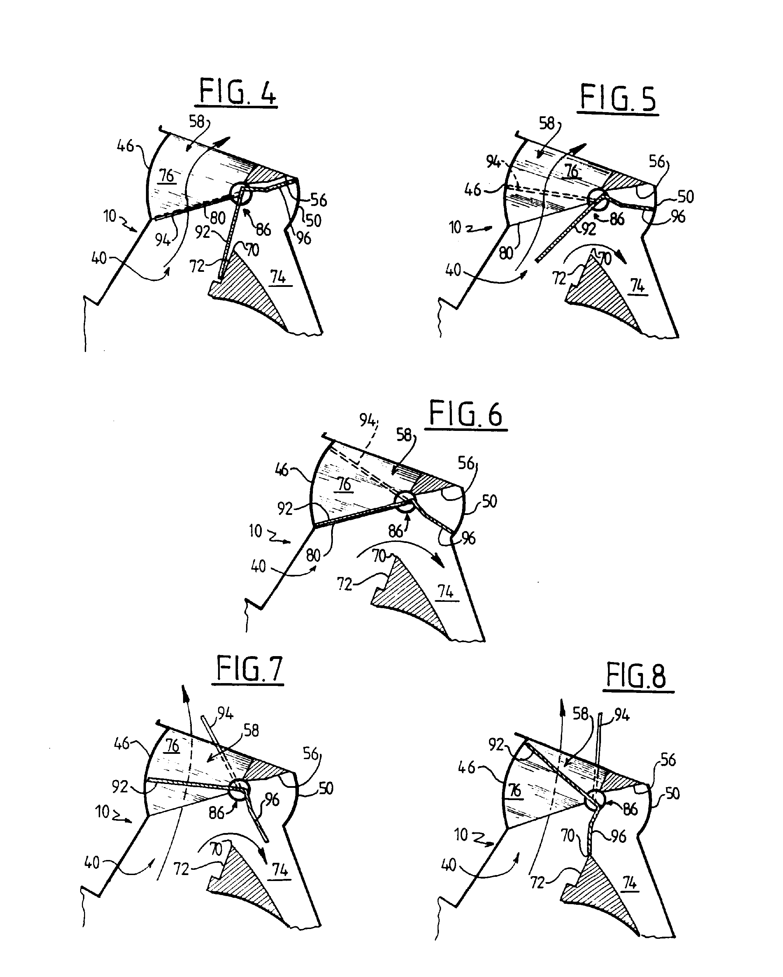

Le fonctionnaient du dispositif sera maintenant décrit en référence aux figures 4 à 8.

Dans la position représentée sur la figure 4, l'aube centrale 92 du volet 86 est en appui sur la paroi 72 et ferme l'accès au second conduit 74. Les deux aubes latérales 94 qui se trouvent au niveau des bords 80 des cloisons 76 et 78 ferment l'accès des sorties latérales 84. L'aube 96 est en appui contre la paroi 56.

Par conséquent, l'air frais ou réchauffé qui pénètre dans la chambre de distribution par l'entrée 40 ne peut s'échapper que par la sortie centrale 82. Le dispositif se trouve dans une position dite d'"aération".

Dans la position de la figure 5, le volet a légèrement pivoté dans le sens des aiguilles d'une montre. L'aube centrale 92 est légèrement écartée de la paroi 72 et les aubes latérales 94 ferment toujours les sorties latérales 84. L'aube 96 vient frotter contre la face interne de la paroi 50.

Par conséquent, l'air frais ou réchauffé peut s'échapper à la fois par la sortie centrale 82 et par la sortie 62 du second conduit 74. On se trouve dans une position dite " aération et pieds ".

Dans la position de la figure 6, le volet 86 a encore pivoté. L'aube centrale 92 se trouve au niveau des bords inférieurs 80 des cloisons 76 et 78 et obture ainsi l'ouverture centrale 82. Les aubes latérales 94 ferment les sorties latérales 84 et l'aube 96 frotte toujours contre la face interne de la paroi 50. Par conséquent, l'air frais ou réchauffé peut seulement s'échapper par le conduit 74 et par la sortie 62. On se trouve par conséquent dans une position dite "pieds".

Dans la position de la figure 7, le volet a encore pivoté dans le même sens. L'aube centrale 92 ferme la sortie centrale 82 tandis que les aubes latérales 94 ferment seulement en partie les sorties latérales 84. Par ailleurs, l'aube 96 ferme en partie l'accès au conduit 74. Par conséquent, une partie de l'air frais ou réchauffé s'échappe par les deux sorties latérales 84 et une autre partir par la sortie 62. On se trouve par conséquent dans une position dite "dégivrage+pieds".

Enfin, dans la position de la figure 8, où le volet a encore tourné de quelques degrés, l'aube centrale 92 ferme toujours la sortie centrale 82 tandis que les aubes latérales 94 laissent passer l'air par les sorties latérales 84. Dans cette même position, l'aube 96 vient par son bord libre contre l'arête 70, fermant ainsi l'accès au conduit 74.

Par conséquent, dans cette position, dite "dégivrage" l'air frais ou réchauffé ne peut s'échapper que par les sorties latérales 84.

## Revendications

1. Dispositif de chauffage et de ventilation de l'habitacle d'un véhicule automobile, comprenant un boîtier (10) délimitant une chambre de distribution (42) et ménageant une entrée d'air (40) pour introduire de l'air frais ou réchauffé dans la chambre de distribution et des sorties d'air (82, 84, 62) pour distribuer cet air frais ou réchauffé dans différentes zones de l'habitacle, un volet de distribution (86) étant monté à pivotement autour d'un axe (XX) à l'intérieur de la chambre de distribution pour régler la répartition de l'air distribué par les sorties, caractérisé en ce que le boîtier (10) délimite un premier conduit (58) qui comporte au moins une cloison interne (76, 78) s'étendant partiellement à l'intérieur de la chambre de distribution (42) et perpendiculairement à l'axe de pivotement (XX) du volet de distribution pour former au moins deux sorties d'air adjacentes (82, 84), en ce que le boîtier (10) délimite un second conduit (74) qui forme une autre sortie d'air (62), et en ce que le volet de distribution (86) comprend une première partie (88) et une seconde partie (90) s'étendant respectivement de part et d'autre de l'axe de pivotement (XX), la première partie de volet comportant au moins deux aubes (92, 94) décalées axialement et angulairement entre elles pour contrôler sélectivement la distribution de l'air par les sorties du premier conduit et la seconde partie de volet comprenant une aube (96) pour contrôler la distribution de l'air par la sortie (62) du second conduit.

2. Dispositif selon la revendication 1, caractérisé en ce que en ce que le premier conduit (58) comporte deux cloisons internes (76, 78) formant trois sorties d'air adjacentes, à savoir une sortie centrale (82) et deux sorties latérales (84) et en ce que la première partie (88) du volet de distribution (86) comprend trois aubes décalées axialement et angulairement entre elles, à savoir une aube centrale (92) et deux aubes latérales (94) propres à contrôler respectivement la sortie centrale et les deux sorties latérales précitées, tandis que la seconde partie (90) du volet de distribution comprend une aube unique (96) propre à contrôler la sortie (62) du second conduit.

3. Dispositif selon la revendication 2, caractérisé en ce que les deux aubes latérales (94) sont sensiblement dans le même plan, tandis que l'aube centrale (92) est décalée angulairement par rapport au plan des deux aubes latérales, et en ce que l'aube unique (96) de la seconde partie (90) du volet est sensiblement dans le même plan que celui des aubes latérales (94).

4. Dispositif selon l'une des revendications 2 et 3, caractérisé en ce que les deux aubes latérales (94) et l'aube centrale (92) sont des plaques de forme générale rectangulaire ayant chacune un côté rattaché à l'axe de pivotement (XX) et trois côtés frottant à étanchéité contre des parois internes et/ou des cloisons internes du premier conduit (58), et en ce que l'aube unique (96) de la seconde partie de volet est une plaque généralement rectangulaire ayant un côté rattaché à l'axe de pivotement (XX) et trois côtés frottant à étanchéité contre des parois internes du second conduit (74).

5. Dispositif selon la revendication 4, caractérisé en ce que les trois côtés de chacune des aubes précitées sont munis d'un joint d'étanchéité (98).

6. Dispositif selon l'une des revendications 2 à 5, caractérisé en ce que la première partie (88) du volet et la seconde partie (90) du volet s'étendent sensiblement sur la même largeur, dans la direction de l'axe de pivotement (XX).

7. Dispositif selon l'une des revendications 1 à 6, caractérisé en ce que le premier conduit (58) et le second conduit (74) sont limités par des parois à génératrices parallèles à l'axe de pivotement (XX) du volet (86) et par des parois transversales perpendiculaires à l'axe de pivotement du volet.

8. Dispositif selon l'une des revendications 1 à 7, caractérisé en ce que la ou chaque cloison interne (76, 78) est limitée, du côté de la chambre de distribution (42), par un bord (80).

9. Dispositif selon l'une des revendications 2 à 8, caractérisé en ce que la sortie centrale (82) dessert une bouche d'aération au niveau de la planche de bord, les deux sorties latérales (84) desservent des bouches de dégivrage/désembuage du pare-brise et la sortie (62) du second conduit (74) dessert une bouche en partie basse de l'habitacle.

## Patentansprüche

1. Vorrichtung zur Belüftung und Heizung des Fahrgastraums eines Kraftfahrzeugs, enthaltend ein Gehäuse (10) zur Begrenzung einer Verteilungskammer (42) und versehen mit einem Lufteintritt (40) für die Einleitung von Frisch- oder Warmluft in die Verteilungskammer sowie Luftaustritte (82, 84, 62) zur Verteilung dieser Frisch- oder Warmluft in verschiedenen Zonen des Fahrgastraums, wobei eine Verteilerklappe (86) um eine Achse (XX) im Innern der Verteilungskammer schwenkbar angebracht ist, um die Verteilung der durch die Austritte verteilten Luft zu regulieren, **dadurch gekennzeichnet,** daß das Gehäuse (10) eine erste Leitung (58) begrenzt, die wenigstens eine Innen-Trennwand (76, 78) aufweist, welche sich teilweise in das Innere der Verteilungskammer (42) und lotrecht zur Schwenkachse (XX) der Verteilerklappe erstreckt, um wenigstens zwei aneinander angrenzende Luftaustritte (82, 84) zu bilden, daß das Gehäuse (10) eine zweite Leitung (74) begrenzt, die einen weiteren Luftaustritt (62) bildet, und daß die Verteilerklappe (86) einen ersten Teil (88) und einen zweiten Teil (90) enthält, die sich jeweils beiderseits der Schwenkachse (XX) erstrecken, wobei der erste Klappenteil wenigstens zwei Umlenkbleche (92, 94) aufweist, die axial und im Winkel zueinander verschoben sind, um die Luftverteilung durch die Austritte der ersten Leitung selektiv zu regeln, und wobei der zweite Klappenteil ein Umlenkelement (96) zur Regelung der Luftverteilung am Austritt (62) der zweiten Leitung enthält.

2. Vorrichtung nach Anspruch 1, **dadurch gekennzeichnet,** daß die erste Leitung (58) zwei Innen-Trennwände (76, 78) enthält, die drei aneinander angrenzende Luftaustritte bilden, nämlich einen mittleren Austritt (82) und zwei seitliche Austritte (84), und daß der erste Teil (88) der Verteilerklappe (86) drei axial und im Winkel zueinander verschobene Umlenkelemente enthält, nämlich ein mittleres Umlenkelement (92) und zwei seitliche Umlenkelemente (94), die sich zur Steuerung des mittleren Austritts bzw. der beiden vorgenannten seitlichen Austritte eignen, während der zweite Teil (90) der Verteilerklappe ein einziges Umlenkelement (96) enthält, welches zur Regelung des Austritts (62) der zweiten Leitung geeignet ist.

3. Vorrichtung nach Anspruch 2, **dadurch gekennzeichnet,** daß sich die beiden seitlichen Umlenkelemente (94) im wesentlichen in der gleichen Ebene befinden, während das mittlere Umlenkelement (92) im Verhältnis zur Ebene der beiden seitlichen Umlenkelemente im Winkel versetzt ist, und daß sich das einzelne Umlenkelement (96) des zweiten Teils (90) der Klappe im wesentlichen in der gleichen Ebene befindet wie die seitlichen Umlenkelemente (94).

4. Vorrichtung nach einem der Ansprüche 2 und 3, **dadurch gekennzeichnet,** daß die beiden seitlichen Umlenkelemente (94) und das mittlere Umlenkelement (92) Platten von allgemein rechteckiger Form sind, die jeweils mit einer Seite an der Schwenkachse (XX) angebracht sind und von denen drei Seiten reibschlüssig dicht mit den Innenwänden und/oder den Innen-Trennwänden der ersten Leitung (58) verbunden sind, und daß das einzelne Umlenkblech (96) des zweiten Klappenteils eine allgemein rechteckige Platte ist, deren eine Seite an der Schwenkachse (XX) befestigt ist und deren drei übrige Seiten reibschlüssig dicht mit den Innenwänden der zweiten Leitung (74) verbunden sind.

5. Vorrichtung nach Anspruch 4, **dadurch gekennzeichnet,** daß die drei Seiten jedes der vorgenannten Umlenkbleche mit einem Dichtungsring (98) versehen sind.

6. Vorrichtung nach einem der Ansprüche 2 bis 5, **dadurch gekennzeichnet,** daß der erste Teil (88) der Klappe und der zweite Teil (90) der Klappe sich im wesentlichen über die gleiche Breite in Richtung der Schwenkachse (XX) erstrecken.

7. Vorrichtung nach einem der Ansprüche 1 bis 6, **dadurch gekennzeichnet,** daß die erste Leitung (58) und die zweite Leitung (74) durch Wände mit parallel zur Schwenkachse (XX) der Klappe (86) verlaufenden Erzeugenden und durch lotrecht zur Schwenkachse der Klappe angeordnete Querwände begrenzt sind.

8. Vorrichtung nach einem der Ansprüche 1 bis 7, **dadurch gekennzeichnet,** daß die oder jede Innen-Trennwand (76, 78) auf der Seite der Verteilungskammer (42) durch eine Kante (80) begrenzt ist.

9. Vorrichtung nach einem der Ansprüche 2 bis 8, **dadurch gekennzeichnet,** daß der mittlere Austritt (82) in eine Entlüftungsöffnung in Höhe der Instrumententafel einmündet, während die beiden seitlichen Austritte (84) in Entfrostungs-/Beschlagverhinderungsöffnungen der Windschutzscheibe einmünden und der Austritt (62) der zweiten Leitung (74) in eine Öffnung im unteren Teil des Fahrgastraums einmündet.

## Claims

1. A heating and ventilating apparatus for the cabin of a motor vehicle, comprising a housing (10) delimiting a distribution chamber (42) and defining an air inlet (40) for introducing fresh or heated air into the distribution chamber, together with air outlets (82, 84, 62) for distributing the said fresh or heated air into different zones of the cabin, a flap-type distribution valve (86) being mounted for pivoting movement about an axis (XX) within the distribution chamber,so as to regulate the division of the air distributed through the outlets, characterised in that the housing (10) delimits a first duct (58) which comprises at least one internal bulkhead (76, 78) extending partially within the distribution chamber (42) and at right angles to the pivot axis (XX) of the distribution valve so as to define at least two adjacent air outlets (82, 84), in that the housing (10) delimits a second duct (74) which defines another air outlet (62), and in that the distribution valve (86) comprises a first portion (88) and a second portion (90) extending respectively on either side of the pivot axis (XX), the first valve portion comprising at least two vanes (92, 94) which are offset axially and circumferentially from each other so as to control selectively the distribution of the air through the outlets of the first duct, and the second valve portion comprising a vane (96) for controlling the distribution of the air through the outlet (62) of the second duct.

2. Apparatus according to Claim 1, characterised in that the first duct (58) comprises two internal bulkheads (76, 78) defining three adjacent air outlets, namely a central outlet (82) and two side outlets (84), and in that the first portion (88) of the distribution valve (86) comprises three vanes which are offset axially and circumferentially from each other, namely a central vane (92) and two side vanes (94) adapted to control, respectively, the said central outlet and the two said side outlets, while the second portion (90) of the distribution valve comprises a single vane (96) for controlling the outlet (62) of the second duct.

3. Apparatus according to Claim 2, characterised in that the two side vanes (94) are in substantially the same plane, while the central vane (92) is offset circumferentially with respect to the plane of the two side vanes, and in that the single vane (96) of the second portion (90) of the valve is substantially in the same plane as that of the side vanes (94).

4. Apparatus according to Claim 2 or Claim 3, characterised in that the two side vanes (94) and the central vane (92) are plates of generally rectangular shape, each of which has one side attached to the pivot axis (XX) and three sides which rub sealingly against internal walls and/or internal bulkheads of the first duct (58), and in that the single vane (96) of the second valve portion is a generally rectangular plate having one side attached to the pivot axis (XX) and three sides sealingly rubbing against internal walls of the second duct (74).

5. Apparatus according to Claim 4, characterised in that the three sides of each of the said vanes are provided with a sealing gasket (98).

6. Apparatus according to one of Claims 2 to 5, characterised in that the first portion (88) of the valve and the second portion (90) of the valve extend over substantially the same width in the direction of the pivot axis (XX).

7. Apparatus according to one of Claims 1 to 6, characterised in that the first duct (58) and the second duct (74) are limited by walls having generatrices parallel to the pivot axis (XX) of the valve (86), and by transverse walls at right angles to the pivot axis of the valve.

8. Apparatus according to one of Claims 1 to 7, characterised in that the or each internal bulkhead (76, 78) is limited by an edge (80) on the same side as the distribution chamber (42).

9. Apparatus according to one of Claims 2 to 8, characterised in that the central outlet (82) feeds an air outlet vent at the level of the fascia panel, with the two side outlets (84) feeding de-icing/de-misting vents for the windscreen and the outlet (62) of the second duct (74) feeds a vent in the lower part of the cabin.
